# EUROPEAN PATENT APPLICATION

(11) **EP 1 873 008 A2**
(43) Date of publication of application: **02.01.2008**
(21) Application number: 07009157.4
(22) Date of filing: 07.05.2007
(51) Int. Cl.: B60N 2/64

(54) **Seat construction for motor vehicles and transport means in general**

(30) Priority: 27.06.2006 IT MI20060226 U
(71) Applicant: SELLE ITALIA S.R.L., 36028 Rossano Veneto (Vicenza) (IT)
(72) Inventor: Bigolin, Giuseppe, 36028 Rossano Veneto (VICENZA) (IT)
(74) Representative: Cicogna, Franco

(57) **Abstract**

A seat construction for motor vehicles comprises at least a seat portion (2), including a substantially central open region (4).

## Description

### BACKGROUND OF THE INVENTION

The present invention relates to a seat construction, specifically designed to be used in motor vehicles or transport means.

In the individual transport means field, the problem of providing very comfortable seats for the driver is a very important one.

Actually, the comfort of the seat is very important from a safety standpoint, since a tired driver would have reduced reaction times, as broadly shown in studies performed by the inventor.

Actually, the driver of a motor vehicle or of an airplane, is compelled to remain in a seated condition, for guiding the transport means, for a comparatively long time, without the possibility of recovering his/her free movement pattern.

This problem is particularly important for war airplane driver, the missions of which may have a duration of several hours, without any possibility of properly moving the seat.

### SUMMARY OF THE INVENTION

Accordingly, the aim of the present invention is to provide a seat construction which provides a user a very high comfort, particularly in a long duration use condition.

Within the scope of the above mentioned aim, a main object of the invention is to provide such a seat construction which can be easily applied to a lot of different motor vehicles or transport means.

Yet another object of the invention is to provide such a seat construction which can be easily made by available making methods and materials.

According to one aspect of the present invention, the above mentioned aim and objects, as well as yet other objects, which will become more apparent hereinafter, are achieved by a seat construction, particularly for transport means, characterized in that said seat construction comprises at least a seat portion including a substantially central open region.

### BRIEF DESCRIPTION OF THE DRAWINGS

Further characteristics and advantages of the present invention will become more apparent hereinafter from the following detailed disclosure of a preferred, though not exclusive embodiment of the invention, which is illustrated, by way of an indicative but not limitative example, in the accompanying drawings, where:

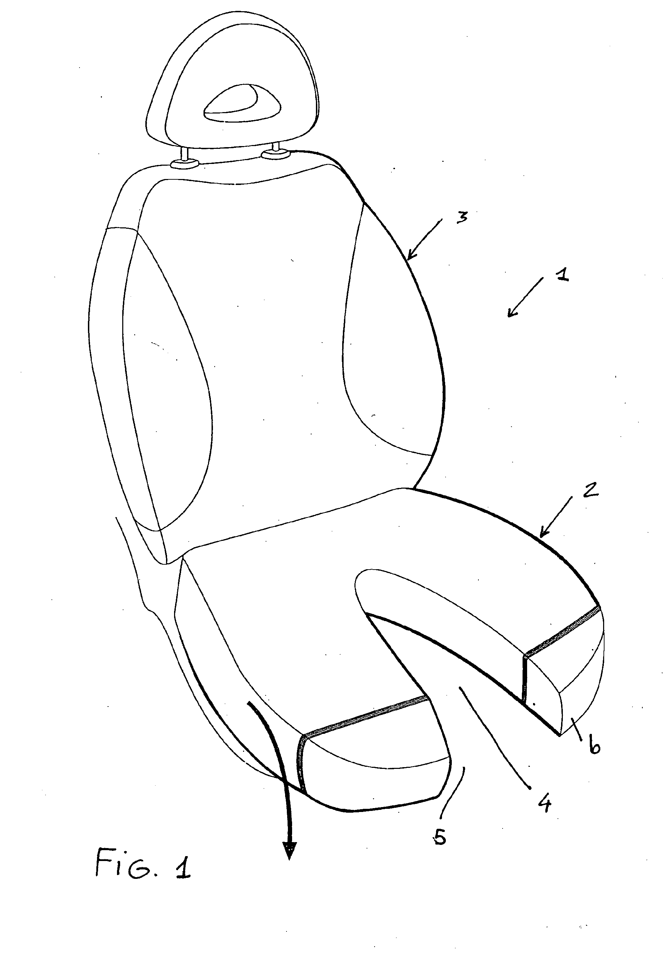

Figure 1 is a perspective view of a seat construction according to the present invention;
Figure 2 is an elevation side view schematically illustrating an application of that same seat construction to a motor vehicle;
Figure 3 is a further side elevation view, schematically showing the application of the seat construction according to the present invention to an airplane;
Figure 4 is a further perspective view, as partially cross-sectioned, showing a motor vehicle including the seat construction according to the invention; and
Figure 5 is a further perspective view showing the seat construction of figure 4.

### DESCRIPTION OF THE PREFERRED EMBODIMENTS

With reference to the number references of the above mentioned figures, the seat construction according to the present invention, which has been generally indicated by the reference number 1, comprises a seat portion 2 and a backrest portion 3 or shoulder.

According to the present invention, the seat portion 2 comprises a central opened region 4.

Said central opened region 4, in particular, can extend through the overall longitudinal extension of the seat portion 2, or, as in the illustrated exemplary embodiment, it can extend only through a portion of said longitudinal extension.

According to a preferred embodiment, the open region 4 defines, as seen in top plan, an isosceles triangle having a base side 5 thereof corresponding to the front side 6 of the seat portion 2.

The dimensions of the open region 4, that is both the longitudinal dimension and cross dimension, with respect to the overall dimension of the seat portion 2, can be changed depending on the use of the seat I and the specific requirements of the users.

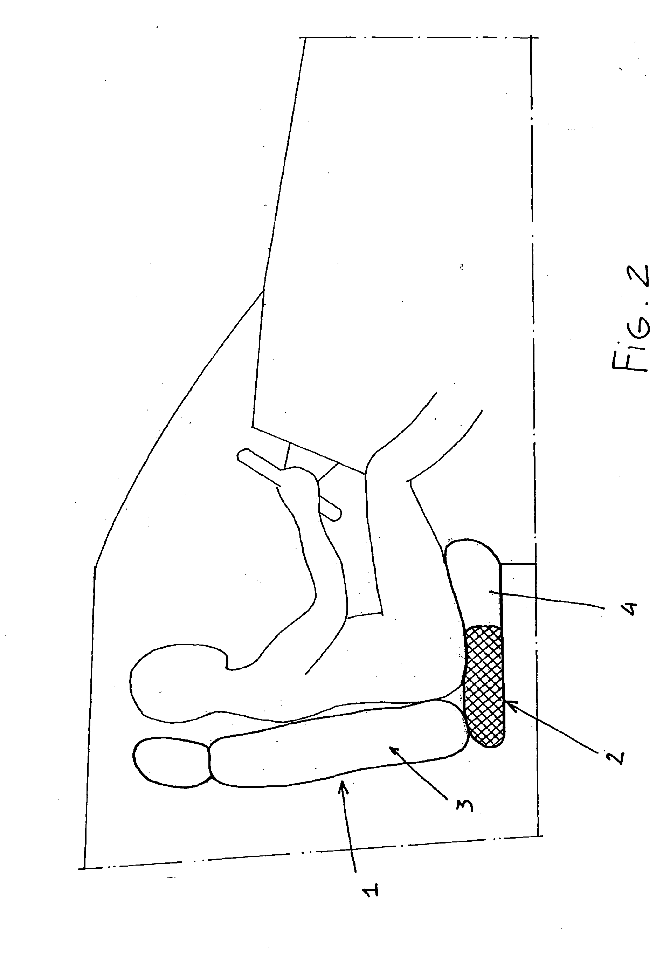

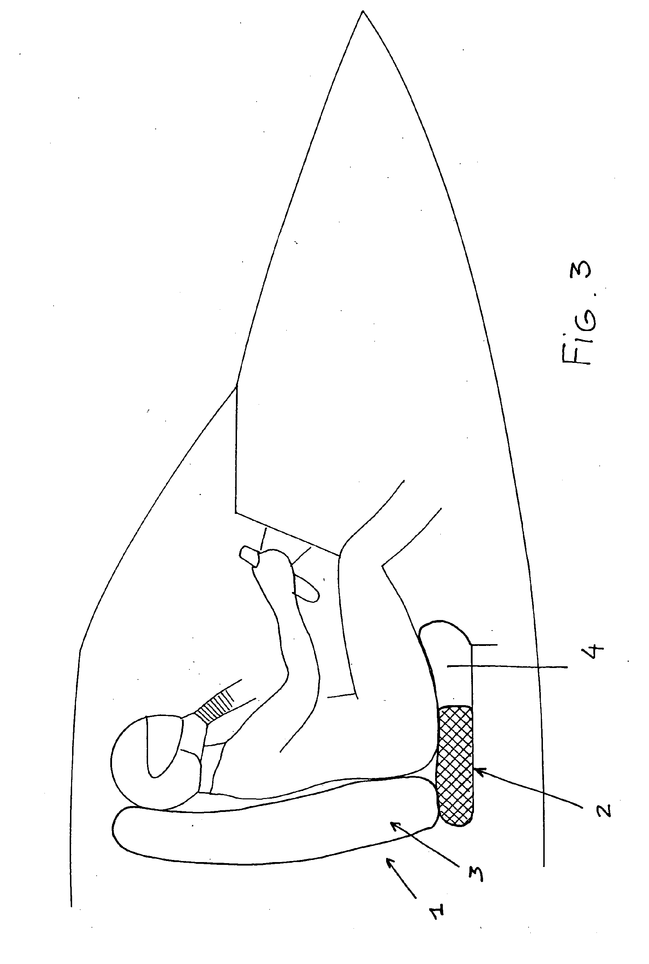

Figure 2 schematically shows an application of the seat 1 according to the present invention to a motor vehicle, whereas figure 3 shows the seat construction according to the present invention applied to a jet plane.

Thus, the central opening 4 of the seat portion 2 will allow a comfortable bearing of the user, jointly with an enhanced air flow, thereby further increasing the seat comfort.

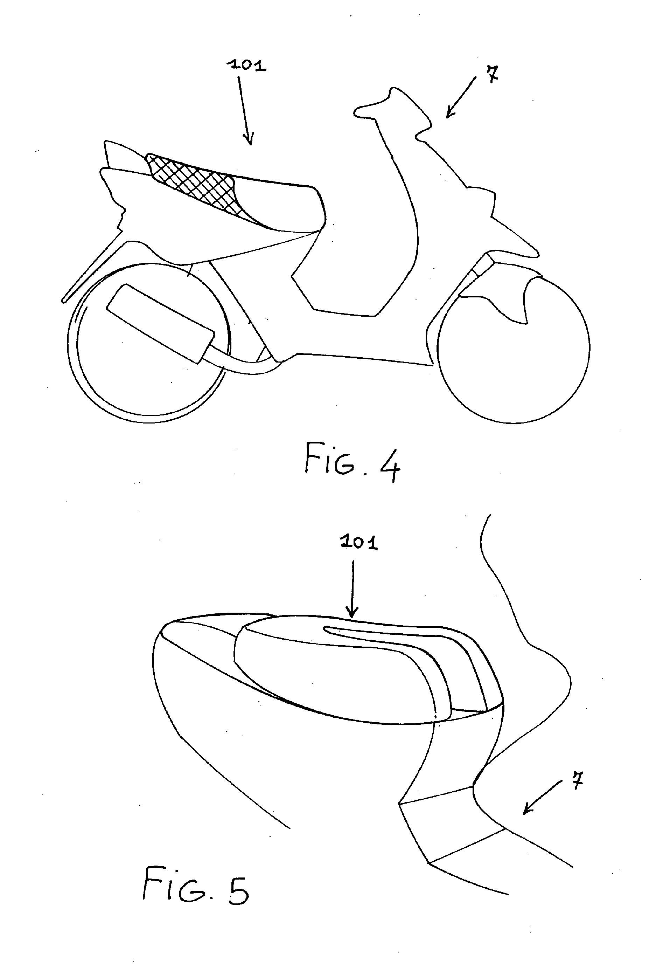

Figures 4 and 5 show a seat construction, generally indicated by the reference number 101, according to a further embodiment of the invention, which can be applied to a motor vehicle, in particular a motorcycle 7.

It should be apparent that seat construction according to the present invention may have a lot of different applications, in addition to those which have been hereinabove disclosed, merely by way of an example.

It has been found that the invention fully achieves the intended aim and objects.

In fact, the invention provides a seat construction which, as used in transport means such as motor vehicles or airplanes, allows the driver to remain in a seated condition for a comparatively long time, with an advantageous comfort and performance.

In practicing the invention, the used materials, as well as the contingent size and shapes, can be any, depending on requirements.

## Claims

1. A seat construction, particularly for transport means in general, **characterized in that** said seat construction comprises at least a seat portion having a substantially central open region.

2. A seat construction, according to claim 1, **characterized in that** said central open region partially extends through a longitudinal dimension of the seat portion.

3. A seat construction, according to claim 1, **characterized in that** said central open region extends through the overall longitudinal extension of the seat portion.

4. A seat construction, according to one or more of the preceding claims, **characterized in that** said open region is, as seen in top plan, an isosceles triangle having a base side corresponding to the front side of the seat portion.

5. A seat construction, according to one or more of the preceding claims, **characterized in that** said seat construction comprises one or more of the disclosed and/or illustrated features.
